# EUROPÄISCHE PATENTSCHRIFT

(11) **EP 3 385 961 B1**
(45) Veröffentlichungstag und Bekanntmachung des Hinweises auf die Patenterteilung: **01.09.2021**
(21) Anmeldenummer: 17165109.4
(22) Anmeldetag: 05.04.2017
(51) Int. Cl.: H01F 7/02, H01F 41/02, F04D 19/04, F04D 29/05, F16C 32/04, H01F 13/00

(54) **MONOLITHISCHER PERMANENTMAGNET**
MONOLITHIC PERMANENT MAGNET
AIMANT PERMANENT MONOLITHIQUE

(43) Veröffentlichungstag der Anmeldung: 10.10.2018
(73) Patentinhaber: PFEIFFER VACUUM GMBH, 35614 Asslar (DE)
(72) Erfinder: Wirth, Adrian, 35582 Wetzlar (DE); Sieben, Daniel, 35435 Wettenberg (DE); Stammler, Herbert, 35396 Giessen (DE)
(74) Vertreter: Manitz Finsterwald Patent- und Rechtsanwaltspartnerschaft mbB

(56) Entgegenhaltungen:
- EP-A1- 3 146 222
- DE-B3-102015 113 681
- JP-A- H11 325 075
- JP-A- 2002 310 154
- US-A1- 2014 035 412

## Beschreibung

Die vorliegende Erfindung betrifft einen monolithischen Permanentmagneten, insbesondere für ein Permanentmagnetlager einer Vakuumpumpe, mit einer Längsachse sowie mehreren entlang dieser angeordneten und zumindest annähernd axial magnetisierten Abschnitten, deren Magnetisierungen jeweils alternierend entgegengesetzt zueinander ausgerichtet sind.

Monolithische Permanentmagnete sind grundsätzlich bekannt und dienen beispielsweise in Vakuumpumpen, insbesondere in Turbomolekularpumpen, zur schmiermittelfreien Lagerung eines in Bezug auf einen Stator drehbaren Rotors. Hierbei weisen sowohl der Stator als auch der Rotor jeweils mindestens einen monolithischen Permanentmagneten auf, welche zusammen ein Permanentmagnetlager bilden.

Überdies ist ein Magnetringstapel aus einzelnen Magneten aus der JP 2002 310 154 A bekannt, wobei der Magnetringstapel zwei endständige Magnete umfasst, welche jeweils eine geringere axiale Abmessung aufweisen als dazwischen angeordnete Magnete. Des Weiteren sind Magnetringstapel in der JP H11 325 075 A, US 2014/035412 A1 und DE 10 2015 113 681 B3 offenbart. Aus EP3146222B1 ist ein monolithischer Permanentmagnet bekannt.

An den axialen Enden eines monolithischen Permanentmagneten treten magnetische Flusslinien aus dem monolithischen Permanentmagneten aus, wodurch ein magnetisches Streufeld entsteht. Das magnetische Streufeld kann hochempfindliche Anwendungen beeinträchtigen, z.B. indem es infolge der Lorentzkraft einen Elektronenstrahl eines Elektronenmikroskops ablenkt, wodurch Abbildungsfehler hervorgerufen werden können. Auch kann das magnetische Streufeld die Magnetisierung einer unter Vakuum abgeschiedenen hochempfindlichen magnetischen Dünnschicht beeinflussen. Es besteht daher ein Bedarf an monolithischen Permanentmagneten mit einem geringen magnetischen Streufeld.

Es ist daher eine Aufgabe der Erfindung, einen monolithischen Permanentmagneten zu schaffen, welcher für hochempfindliche Anwendungen besser geeignet ist.

Die Aufgabe wird durch einen monolithischen Permanentmagneten mit den Merkmalen des Anspruchs 1 gelöst und insbesondere dadurch, dass sich die axiale Abmessung und/oder die Magnetisierung wenigstens eines magnetisierten Abschnitts und die axiale Abmessung und/oder die Magnetisierung wenigstens eines anderen magnetisierten Abschnitts unterscheiden.

Der Erfindung liegt die Erkenntnis zugrunde, dass sich das magnetische Streufeld eines monolithischen Permanentmagneten verringert, wenn sich die axiale Abmessung und/oder Magnetisierung wenigstens eines magnetisierten Abschnitts von der axialen Abmessung und/oder Magnetisierung wenigstens eines anderen magnetisierten Abschnitts unterscheidet bzw. unterscheiden. Aus der Verringerung des magnetischen Streufeldes ergibt sich der Vorteil, dass sich der monolithische Permanentmagnet bei Anwendungen verwenden lässt, bei welchen ein geringes magnetisches Streufeld unerlässlich ist, wie zum Beispiel in Lagern von Vakuumpumpen, welche zur Evakuierung von Elektronenmikroskopen dienen. Dabei ist die Verwendung des erfindungsgemäßen monolithischen Permanentmagneten nicht auf die Anwendung in Vakuumpumpen beschränkt. Es ist auch denkbar, dass ein erfindungsgemäßer monolithischer Permanentmagnet überall dort eingesetzt werden kann, wo geringe magnetische Streufelder wünschenswert sind, wie z.B. in Audioverstärkern.

Unter Magnetisierung eines magnetisierten Abschnitts wird hier die magnetische Remanenz verstanden, welche der magnetisierte Abschnitt beibehält, nachdem das zum Aufmagnetisieren, d.h. zum Erreichen der Magnetisierung, benötigte externe Magnetfeld deaktiviert wurde.

Bei einem monolithischen Permanentmagneten handelt es sich, anders als bei einem durch mehrere aufeinandergestapelte Einzelmagnete gebildeten Magnetstapel, um einen aus einem Stück gefertigten Magneten. Die einzelnen Abschnitte des monolithischen Permanentmagneten sind daher visuell nicht als solche zu erkennen, sondern unterscheiden sich nur bezüglich ihrer jeweiligen Magnetisierungsausrichtung.

Jeder magnetisierte Abschnitt weist einen magnetischen Nord- und Süd-Pol auf, wobei konventionsgemäß die Ausrichtung der Magnetisierung durch einen im Inneren des magnetisierten Abschnitts vom Süd-Pol ausgehenden und am Nord-Pol endenden Vektorpfeil definiert ist.

Bei mehreren zumindest annähernd axial magnetisierten Abschnitten, deren Magnetisierungen jeweils alternierend entgegengesetzt zueinander ausgerichtet sind, grenzen jeweils dieselben magnetischen Pole an der Grenze zwischen zwei benachbarten Abschnitten aneinander.

Wie bereits erwähnt sind die jeweiligen magnetisierten Abschnitte des monolithischen Permanentmagneten zumindest annähernd in axialer Richtung magnetisiert. Dies bedeutet, dass die Magnetisierungsausrichtung eines magnetisierten Abschnitts zumindest annähernd parallel zur Längsachse des monolithischen Permanentmagneten ausgerichtet ist.

Der monolithische Permanentmagnet besteht vorzugsweise aus einem magnetisierbaren Material, wie z.B aus Eisen, einer ferrimagnetischen Keramik (Ferrite) oder einem magnetisierbaren Kunststoff. Bevorzugt können auch magnetisierbare Materialien verwendet werden, welche Seltenerdmetalle umfassen, wie zum Beispiel Samarium-Cobalt (SmCo) oder Neodym-Eisen-Bor (NdFeB). Die magnetisierbaren Materialien lassen sich beispielsweise durch ein Sinterverfahren fügen. Ein monolithischer Permanentmagnet kann eine Gesamtlänge zwischen 15 und 25 mm, vorzugsweise zwischen 17 und 23 mm und besonders bevorzugt zwischen 19 und 21 mm aufweisen. Die Breite eines Abschnitts kann zwischen 1 und 10 mm, vorzugsweise zwischen 2 und 9 mm und besonders bevorzugt zwischen 3 und 8 mm liegen.

Vorteilhafte Ausbildungen der Erfindung sind den Unteransprüchen, der Beschreibung und den Zeichnungen zu entnehmen.

Beispielsweise kann die axiale Abmessung und/oder Magnetisierung des wenigstens einen magnetisierten Abschnitts geringer, insbesondere um die Hälfte geringer, sein als die axiale Abmessung und/oder Magnetisierung des anderen magnetisierten Abschnitts.

Eine besonders starke Verringerung des magnetischen Streufeldes lässt sich erreichen, wenn sich die axiale Abmessung und/oder Magnetisierung eines oder jedes Endabschnitts und die axiale Abmessung und/oder Magnetisierung eines zu dem oder jedem Endabschnitt benachbarten magnetisierten Abschnitts unterscheiden. Idealerweise ist bzw. sind die axiale Abmessung und/oder Magnetisierung des oder jedes Endabschnitts zumindest annähernd um die Hälfte geringer als die des benachbarten Abschnitts. Es versteht sich, dass die axiale Abmessung und/oder Magnetisierung des oder jedes Endabschnitts grundsätzlich auch um einen anderen Bruchteil als die Hälfte geringer sein kann bzw. können als die des benachbarten Abschnitts, wie z.B. um ein Drittel, zwei Drittel, ein Viertel oder beliebige andere Bruchteile. Ferner ist auch denkbar, dass mindestens ein magnetisierter Abschnitt eine größere axiale Abmessung und/oder stärkere Magnetisierung aufweist, als die eines benachbarten Abschnitts.

Bevorzugt sind die axialen Abmessungen und/oder Magnetisierungen aller zwischen zwei Endabschnitten angeordneten Abschnitte des monolithischen Permanentmagnets zumindest annähernd gleich groß. Dies schließt ein, dass ein Endabschnitt zumindest annähernd die gleiche axiale Abmessung und/oder Magnetisierung aufweist, wie alle anderen zwischen den Endabschnitten angeordneten Abschnitte.

Grundsätzlich ist es aber auch denkbar, dass nicht nur der oder jeder Endabschnitt eine unterschiedliche axiale Abmessung und/oder Magnetisierung zu dem oder jedem Endabschnitt benachbarten magnetisierten Abschnitt aufweist, sondern dass auch die zu dem oder jedem Endabschnitt benachbarten Abschnitte eine unterschiedliche axiale Abmessung und/oder Magnetisierung zu sowohl dem oder jedem Endabschnitt als auch zu dem oder jedem Abschnitt, welcher dem oder jedem Endabschnitt in axialer Richtung gesehen gegenüberliegt. Anders ausgedrückt können sich die axialen Abmessungen und/oder Magnetisierungen der magnetisierten Abschnitte ausgehend von dem oder jedem Endabschnitt in axialer Richtung gesehen zur Mitte des monolithischen Permanentmagneten hin von Abschnitt zu Abschnitt ändern, vorzugsweise zunehmen, insbesondere sukzessiv zunehmen.

Bevorzugt sind alle magnetisierten Abschnitte des monolithischen Permanentmagnets magnetisch gesättigt, d.h. die magnetisierten Abschnitte weisen zumindest annähernd einen maximal erreichbaren Sättigungswert der Magnetisierung auf. An dieser Stelle ist hervorzuheben, dass auch der oder jeder magnetisierte Endabschnitt magnetisch gesättigt sein kann, insbesondere wenn die axiale Abmessung des oder jedes Endabschnitts geringer ist als die des benachbarten Abschnitts. Es ist aber auch denkbar, dass alle magnetisierten Abschnitte des monolithischen Permanentmagneten zumindest annähernd gleiche axiale Abmessungen aufweisen, und mindestens ein magnetisierter Endabschnitt unterschiedlich, insbesondere geringer, magnetisiert ist als ein zu dem mindestens einen Endabschnitt benachbarter Abschnitt. Ferner ist vorstellbar, dass mindestens ein magnetisierter Endabschnitt sowohl eine unterschiedliche, insbesondere geringere, axiale Abmessung als auch eine unterschiedliche, insbesondere geringere, Magnetisierung aufweisen kann als ein zu dem mindestens einen Endabschnitt benachbarter magnetisierter Abschnitt.

Es versteht sich, dass zwischen den magnetisch gesättigten Abschnitten Bereiche vorliegen, in welchen sich die Magnetisierungsausrichtung ändert, so dass hier eine magnetische Sättigung geringer ist als in den magnetisierten Abschnitten.

Überraschenderweise konnte gezeigt werden, dass sich das magnetische Streufeld eines monolithischen Permanentmagneten besonders stark reduzieren lässt, wenn dieser eine ungerade Anzahl magnetisierter Abschnitte aufweist.

Gemäß einer vorteilhaften Ausgestaltung ist der monolithische Permanentmagnet hohlzylindrisch ausgebildet. Es versteht sich, dass der monolithische Permanentmagnet aber auch als ein massiver Zylinder ausgebildet sein kann. Grundsätzlich kann der monolithische Permanentmagnet auch eine beliebige andere prismatische Form, z.B. die eines Quaders, aufweisen.

Die Erfindung ist auch auf ein Permanentmagnetlager, insbesondere für eine Vakuumpumpe, mit einem Paar von monolithischen Permanentmagneten gerichtet, wobei der eine Permanentmagnet relativ zu dem anderen Permanentmagneten um eine zu den Längsachsen der Permanentmagnete zumindest annähernd parallele Drehachse drehbar gelagert ist. Dabei ist einer der Permanentmagneten radial innerhalb des anderen Permanentmagneten derart angeordnet, dass sich radial benachbarte Abschnitte des äußeren und inneren monolithischen Permanentmagneten in Richtung der Drehachse gesehen zumindest annähernd auf gleicher Höhe befinden. Des Weiteren sind die Magnetisierungen der radial benachbarten Abschnitte des äußeren und inneren monolithischen Permanentmagneten zumindest annähernd gleichgerichtet.

Die Längsachsen der Permanentmagnete und die Drehachse des Permanentmagnetlagers sind bevorzugt parallel zueinander ausgerichtet. Insbesondere können die Längsachsen der Permanentmagnete und die Drehachse des Permanentmagnetlagers zusammenfallen.

Die radiale Steifigkeit des Permanentmagnetlagers lässt sich deutlich erhöhen, wenn das Permanentmagnetlager aus mindestens zwei in Richtung der Drehachse gesehen aufeinanderfolgende Paare von monolithischen Permanentmagneten gebildet ist und angrenzende Abschnitte der aufeinanderfolgenden Permanentmagnete jeweils entgegengesetzte Magnetisierungen aufweisen.

Das Permanentmagnetlager kann sowohl ausschließlich monolithische Permanentmagnete umfassen als auch eine Kombination aus einem oder mehreren monolithischen Permanentmagneten und einem oder mehreren Einzelmagneten oder auch eine Kombination mehrerer Einzelmagnete, wovon mindestens einer sich in der axialen Abmessung und/oder Magnetisierung von den restlichen unterscheidet.

Vorteilhafterweise sind die Permanentmagnete des oder jedes Paares von Permanentmagneten hohlzylindrisch ausgebildet. Umfasst das Permanentmagnetlager auch Einzelmagnete, so können diese als Ringmagnete ausgebildet sein.

Die Erfindung betrifft auch eine Vakuumpumpe, insbesondere Turbomolekularpumpe, mit einem Rotor und einem Stator und einem Permanentmagnetlager, wobei der eine monolithische Permanentmagnet rotorseitig und der andere monolithische Permanentmagnet statorseitig angeordnet ist. Es ist dabei unerheblich, ob der Rotor innerhalb des Stators oder andersherum der Stator innerhalb des Rotors angeordnet ist.

Weiterer Gegenstand der Erfindung ist ein Verfahren zur Herstellung eines monolithischen Permanentmagneten. Das Verfahren umfasst folgende Schritte: Bereitstellen eines Körpers aus magnetisierbarem Material, welcher eine Längsachse definiert, Anordnen des Körpers im Inneren einer den Körper umgebenden äußeren Spule mit mehreren axial aufeinanderfolgenden Wicklungen und Anlegen einer Spannung an die Spule zur Erzeugung eines Stromflusses durch die Wicklungen derart, dass der resultierende Stromfluss in axial aufeinanderfolgenden Wicklungen entgegengesetzt gerichtet ist, um durch das dadurch hervorgerufene Magnetfeld einen monolithischen Permanentmagneten aus dem Körper zu bilden.

Ist der Körper hohlzylindrisch, so kann das Verfahren zusätzlich die Schritte umfassen: Bereitstellen eines hohlzylindrischen Körpers aus magnetisierbarem Material, welcher eine Längsachse definiert, zusätzliches Anordnen einer inneren Spule mit mehreren axial aufeinanderfolgenden Wicklungen im Inneren des Körpers, wobei die Wicklungen der inneren Spule und der äußeren Spule in Richtung der Längsachse des Körpers gesehen zumindest annähernd auf gleicher Höhe angeordnet sind und Anlegen einer Spannung zur Erzeugung eines Stromflusses durch die Wicklungen der inneren und der äußeren Spule derart, dass der resultierende Stromfluss durch die Wicklungen der inneren und äußeren Spule entgegengesetzt gerichtet ist, um durch das zwischen den inneren und äußeren Wicklungen hervorgerufene Magnetfeld einen monolithischen hohlzylinderförmigen Permanentmagneten aus dem Körper zu bilden.

Es versteht sich jedoch, dass zur Herstellung eines hohlzylindrischen monolithischen Permanentmagneten grundsätzlich eine Spule, d.h. entweder die innere Spule oder die äußere Spule, ausreichend ist.

Ferner ist es denkbar, dass die innere und äußere Spule durch eine einzelne Spule mit gegenläufigen Wicklungen gebildet ist, wobei die inneren und äußeren Wicklungen jeweils auf einer gemeinsamen Höhe angeordnet sind.

Vorteilhafterweise weisen die Wicklungen einen rechteckigen, insbesondere quadratischen, Leiterquerschnitt auf. Es ist aber nicht ausgeschlossen, dass die Wicklungen auch einen anderen Leiterquerschnitt aufweisen können, wie zum Beispiel einen runden oder polygonen Leiterquerschnitt.

Besonders gute Ergebnisse hinsichtlich der Aufmagnetisierung der einzelnen Abschnitte lassen sich erreichen, wenn mindestens eine der Wicklungen getrennt von den anderen Wicklungen ansteuerbar ist. Vorzugsweise sind alle Wicklungen der inneren und/oder äußeren Spule einzeln ansteuerbar.

Zur Herstellung eines monolithischen Permanentmagneten mit wenigstens einem magnetisierten Abschnitt, dessen axiale Abmessung sich von der axialen Abmessung wenigstens eines anderen magnetisierten Abschnitts unterscheidet, ist es vorteilhaft, wenn sich die axiale Abmessung wenigstens einer Wicklung einer Spule von der axialen Abmessung wenigstens einer anderen Wicklung der Spule unterscheidet. Soll sich zusätzlich oder alternativ die Magnetisierung wenigstens eines magnetisierten Abschnitts von der Magnetisierung eines anderen magnetisierten Abschnitts unterscheiden, so kann wenigstens eine Wicklung einer Spule bei Anlegen einer Spannung durch den resultierenden Stromfluss ein Magnetfeld erzeugen, welches sich von dem Magnetfeld einer anderen Wicklung der Spule unterscheidet.

Ein monolithischer Permanentmagnet mit mindestens einem magnetisierten Endabschnitt, welcher eine geringere axiale Abmessung und/oder Magnetisierung aufweist als die des zu dem Endabschnitt benachbarten Abschnitts, lässt sich dadurch herstellen, dass alle Wicklungen einer Spule zumindest annähernd gleiche axiale Abmessungen aufweisen und wenigstens eine Wicklung über ein axiales Ende des Körpers übersteht. Grundsätzlich ist hierbei auch denkbar, dass die Wicklung an dem axialen Ende des Körpers nicht axial übersteht, sondern einen geringeren Leiterquerschnitt, insbesondere eine geringere axiale Abmessung, aufweist, so dass die innere und/oder äußere Spule und der Körper bündig zueinander ausgerichtet sind.

Nachfolgend wird die Erfindung rein beispielhaft anhand von möglichen Ausführungsformen unter Bezugnahme auf die beigefügten Zeichnungen beschrieben. Es zeigen:
- Fig. 1: eine perspektivische Ansicht einer Turbomolekularpumpe;
- Fig. 2: eine Ansicht der Unterseite der Turbomolekularpumpe von Fig. 1;
- Fig. 3: einen Querschnitt der Turbomolekularpumpe längs der in Fig. 2 gezeigten Schnittlinie A-A;
- Fig. 4: eine Querschnittsansicht der Turbomolekularpumpe längs der in Fig. 2 gezeigten Schnittlinie B-B;
- Fig. 5: eine Querschnittsansicht der Turbomolekularpumpe längs der in Fig. 2 gezeigten Schnittlinie C-C;
- Fig. 6: eine Querschnittsansicht eines erfindungsgemäßen Permanentmagnetlagers mit einem monolithischen Permanentmagneten gemäß einer ersten Ausführungsform;
- Fig. 7: eine Querschnittsansicht eines erfindungsgemäßen Permanentmagnetlagers mit einem monolithischen Permanentmagneten gemäß einer zweiten Ausführungsform; und
- Fig. 8: eine Teilquerschnittansicht einer Anordnung zur Herstellung eines erfindungsgemäßen monolithischen Permanentmagneten.

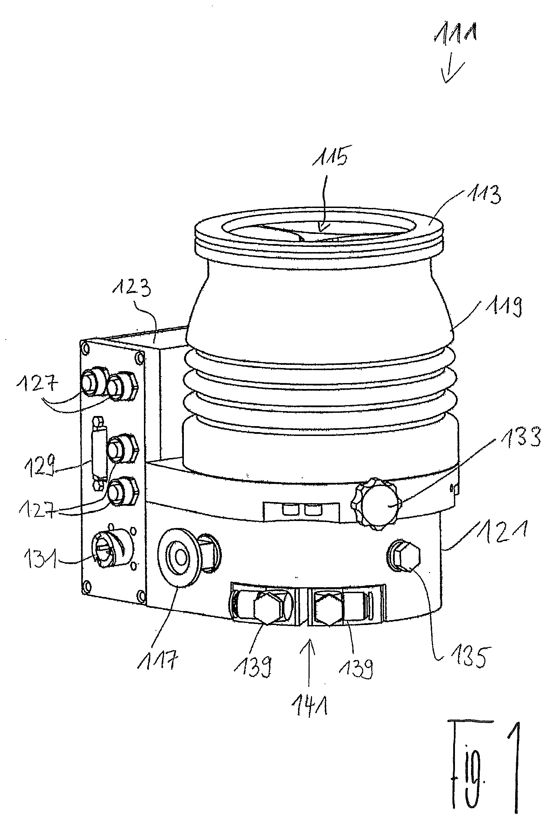

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

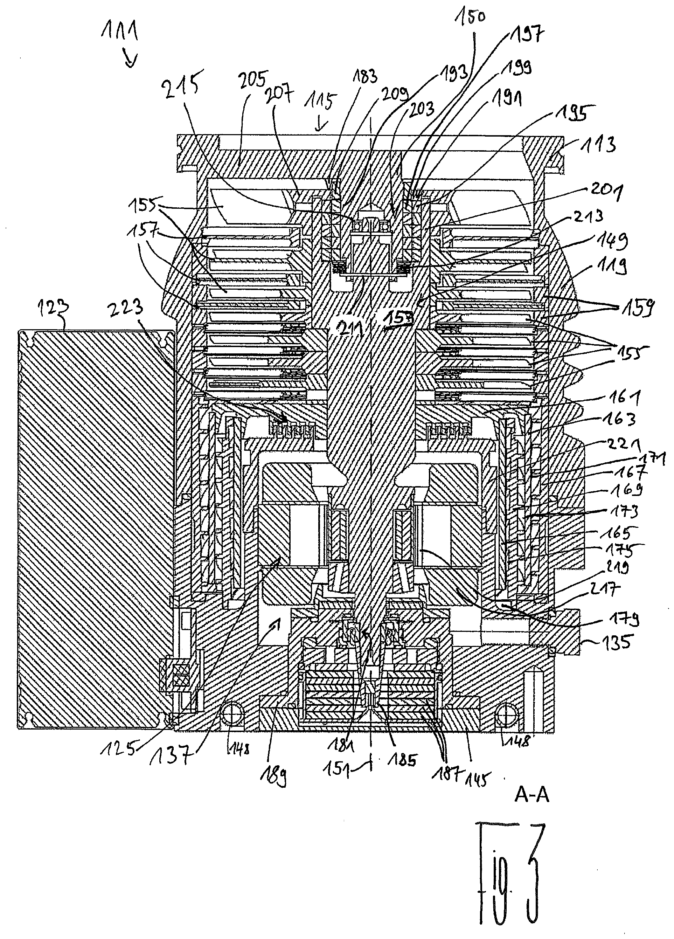

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, so dass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

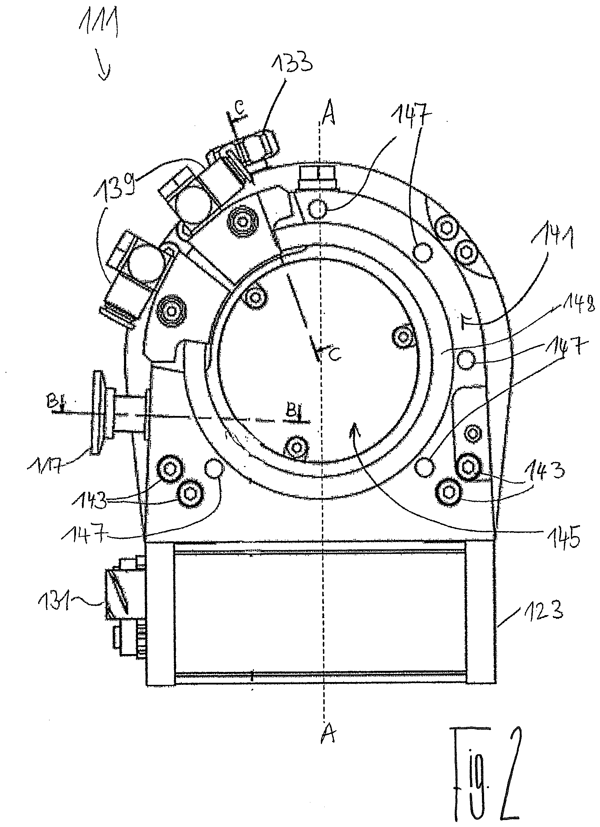

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

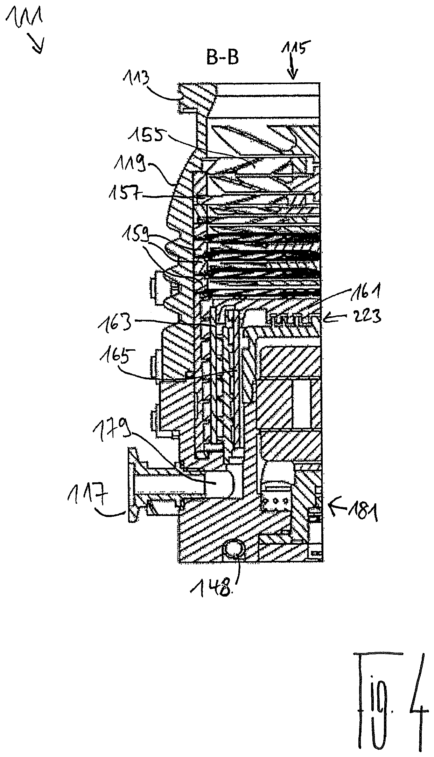

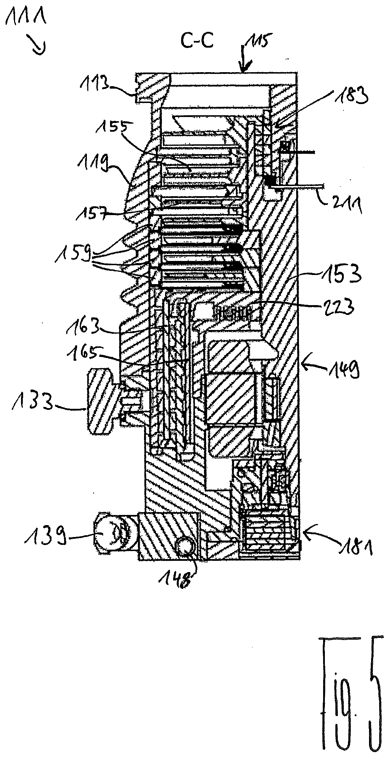

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein bezüglich eines Stators 150 drehbarer Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen. Anstelle des Permanentmagnetlagers 183 kann auch ein erfindungsgemäßes Permanentmagnetlager 10 vorgesehen sein, wie es nachfolgend noch beschrieben wird.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator 150 in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator 150 einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, so dass das Fanglager 215 im normalen Betrieb der Vakuumpumpe nicht in Eingriff gelangt, und gleichzeitig klein genug, so dass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

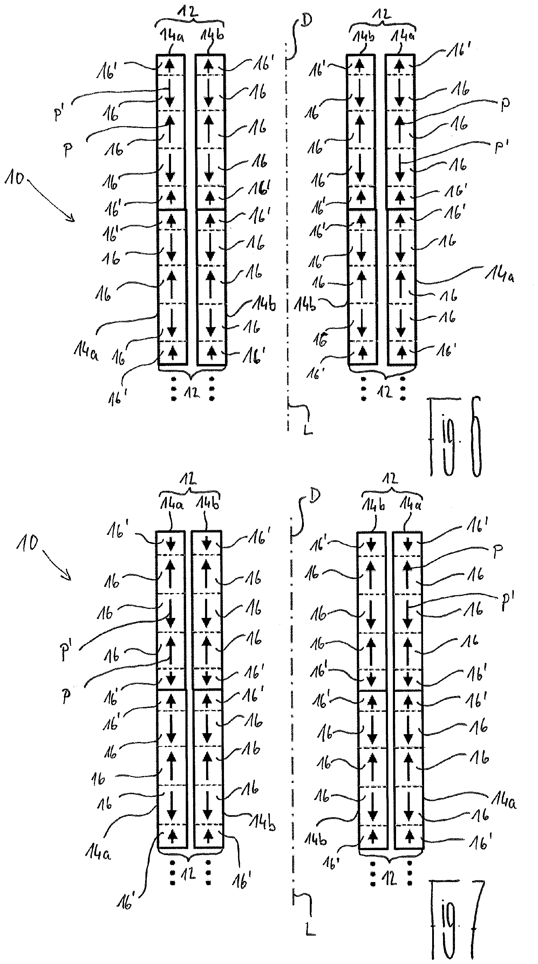

Fig. 6 zeigt eine Querschnittansicht eines erfindungsgemäßen Permanentmagnetlagers 10 gemäß einer ersten Ausführungsform, welches in funktioneller Hinsicht anstelle des Permanentmagnetlagers 183 der Turbomolekularpumpe 111 verwendet werden kann.

Das Permanentmagnetlager 10 umfasst in Richtung einer Drehachse D des Permanentmagnetlagers 10 gesehen zwei aufeinanderfolgende Paare 12 von hohlzylindrischen monolithischen Permanentmagneten 14a, 14b (nachfolgend kurz Permanentmagnete 14a, 14b). Es versteht sich, dass das Permanentmagnetlager 10 nur ein Paar 12 von Permanentmagneten 14a, 14b oder auch mehr als zwei Paare 12 von Permanentmagneten 14a, 14b umfassen kann, wie durch die sich in axialer Richtung fortsetzenden Fortsetzungspunkte angedeutet ist.

Die beiden in axialer Richtung aufeinanderfolgenden Permanentmagnete 14a können rotorseitig, d.h. an dem Rotor 149 der Turbomolekularpumpe 111, angebracht sein. Radial innerhalb der rotorseitigen Permanentmagnete 14a sind die beiden monolithischen Permanentmagnete 14b angeordnet, welche statorseitig an dem Stator 150 der Turbomolekularpumpe 111 angebracht sein können. Mit anderen Worten sind die beiden rotorseitigen Permanentmagnete 14a relativ zu den beiden statorseitigen Permanentmagneten 14b bezüglich der Drehachse D des Magnetlagers 10 drehbar angeordnet. Es versteht sich, dass bei einer entsprechenden Ausgestaltung der Turbomolekularpumpe 111 auch andersherum die statorseitigen Permanentmagnete 14b radial außerhalb der rotorseitigen Permanentmagnete 14a angeordnet sein könnten.

Die rotorseitigen und statorseitigen Permanentmagnete 14a, 14b weisen jeweils eine Längsachse L auf. In dem in Fig. 6 dargestellten Ausführungsbeispiel fallen die Längsachsen L der rotorseitigen und statorseitigen Permanentmagnete 14a, 14b mit der Drehachse D des Permanentmagnetlagers 10 zusammen.

Entlang seiner jeweiligen Längsachse L weist jeder der Permanentmagnete 14a, 14b des Permanentmagnetlagers 10 mehrere axial angeordnete sowie zumindest annähernd axial magnetisierte Abschnitte 16, 16' auf, deren Magnetisierungen jeweils alternierend entgegengesetzt zueinander ausgerichtet sind, was in Fig. 6 bis 8 durch alternierend entgegengesetzt zueinander ausgerichtete Vektorpfeile P, P' angedeutet ist. Wie insbesondere anhand der Fig. 6 bis 8 zu erkennen ist, unterscheiden sich die axialen Abmessungen der beiden Endabschnitte 16' eines jeweiligen Permanentmagneten 14a, 14b von den axialen Abmessungen der zu den Endabschnitten 16' benachbarten Abschnitte 16. Konkret sind die axialen Abmessungen der Endabschnitte 16' um die Hälfte geringer als die der benachbarten Abschnitte 16. Dahingegen sind die axialen Abmessungen aller anderen zwischen den beiden Endabschnitten 16' angeordneten Abschnitte 16 eines jeden Permanentmagneten 14a, 14b zumindest annähernd gleich groß.

Insgesamt ergibt sich durch Summierung sämtlicher axialer Abmessungen aller Abschnitte 16, 16' eine gesamte Länge eines jeweiligen Permanentmagneten 14a, 14b von 15 bis 25 mm, vorzugsweise von 17 bis 23 mm und besonders bevorzugt von 19 bis 21 mm. In radialer Richtung gesehen weisen die Abschnitte 16, 16' typischerweise eine Breite von 1 bis 10 mm, vorzugsweise von 2 bis 9 mm und besonders bevorzugt von 3 bis 8 mm auf.

Auch wenn die im Verhältnis zu den Vektorpfeilen P, P' der zwischen den Endabschnitten 16' angeordneten Abschnitte 16 kleineren Vektorpfeile P, P' der Endabschnitte 16' (Fig. 6 bis 8) suggerieren könnten, dass die Endabschnitte 16' nicht vollständig magnetisiert sind, d.h. eine geringere magnetische Sättigung aufweisen, so sei an dieser Stelle angemerkt, dass sämtliche Abschnitte 16, 16' eines jeweiligen Permanentmagneten 14a, 14b magnetisch gesättigt sind. Dennoch lässt sich durch die im Vergleich zu den benachbarten Abschnitten 16 geringeren axialen Abmessungen der Endabschnitte 16' eine Verringerung des magnetischen Streufelds eines Permanentmagneten 14a, 14b erreichen.

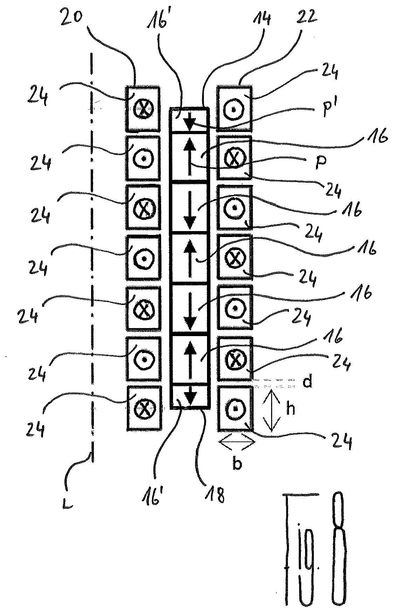

Überraschenderweise konnte gezeigt werden, dass sich eine noch stärkere Verringerung des magnetischen Streufeldes eines Permanentmagneten 14a, 14b erreichen lässt, wenn nicht nur die Endabschnitte 16' geringere axiale Abmessungen aufweisen, sondern auch die Anzahl von magnetisierten Abschnitten 16, 16' ungerade ist. Konkret umfasst jeder Permanentmagnet 14a, 14b in den in Fig. 6 und 7 dargestellten Ausführungsbeispielen insgesamt fünf magnetisierte Abschnitte 16, 16' und in dem in Fig. 8 dargestellten Ausführungsbeispiel insgesamt sieben magnetisierte Abschnitte 16, 16'.

Nun wieder auf das in Fig. 6 dargestellte Permanentmagnetlager 10 zurückkommend ist zu erkennen, dass sich der rotorseitige Permanentmagnet 14a und der statorseitige Permanentmagnet 14b jedes Paares 12 von Permanentmagneten 14a, 14b in Richtung der Drehachse D des Permanentmagnetlagers 10 gesehen zumindest annähernd auf gleicher Höhe befinden, so dass die Magnetisierungen von radial benachbarten Abschnitten 16, 16' des rotorseitigen Permanentmagneten 14a und des statorseitigen Permanentmagneten 14b zumindest annähernd gleichgerichtet sind.

Des Weiteren ist anhand von Fig. 6 zu erkennen, dass bei den in Richtung der Drehachse D des Permanentmagnetlagers 10 aufeinanderfolgenden Paaren 12 von Permanentmagneten 14a, 14b einander angrenzende Endabschnitte 16' der aufeinanderfolgenden Permanentmagnete 14a, 14b jeweils gleichgerichtete Magnetisierungen aufweisen. Mit anderen Worten weisen die jeweils aneinandergrenzenden halben Endabschnitte 16' zusammen eine axiale Abmessung auf, welche der eines der benachbarten Abschnitten 16 entspricht. Der Vorteil einer derartigen Anordnung zweier Paare 12 von Permanentmagneten 14a, 14b liegt darin, dass sich die Paare 12 von Permanentmagneten 14a, 14b sowohl durch das geringe magnetische Streufeld eines jeden einzelnen Permanentmagneten 14a, 14b als auch durch die gleichgerichtete Magnetisierung der angrenzenden Endabschnitte 16' axial aufeinanderfolger Permanentmagnete 14a, 14b besonders gut, d.h. mit geringen Stapeltoleranzen, übereinander stapeln lassen.

Fig. 7 zeigt ein erfindungsgemäßes Permanentmagnetlager 10 gemäß einer zweiten Ausführungsform, welches sich von dem Permanentmagnetlager 10 gemäß der ersten Ausführungsform darin unterscheidet, dass angrenzende Endabschnitte 16' der in Richtung der Drehachse D des Permanentmagnetlagers 10 aufeinanderfolgenden Permanentmagnete 14a, 14b jeweils entgegengesetzte Magnetisierungen aufweisen. Da sich die radiale Steifigkeit eines Permanentmagnetlagers 10 durch die Anzahl entgegengesetzt magnetisierter Abschnitte pro Längeneinheit erhöht, ergibt sich bei einer Anordnung der Paare 12 von Permanentmagneten 14a, 14b in dem Permanentmagnetlager 10 gemäß der zweiten Ausführungsform der Vorteil, dass dieses im Vergleich zu dem Permanentmagnetlager 10 gemäß der ersten Ausführungsform eine höhere radiale Lagersteifigkeit aufweist.

In diesem Zusammenhang ist zu erwähnen, dass Abstoßungskräfte, welche zwischen zwei angrenzenden entgegengesetzt magnetisierten Endabschnitten 16' zweiter übereinander angeordneter Permanentmagnete 14a, 14b hervorgerufen werden, durch die Verringerung des magnetischen Streufelds der erfindungsgemäßen Permanentmagnete 14a, 14b verringert sind. Demzufolge lassen sich die Permanentmagnete 14a, 14b in Richtung ihrer Längsachsen L leichter übereinander anordnen und Stapeltoleranzen zwischen übereinander angeordneten Permanentmagneten 14a, 14b des Permanentmagnetlagers 10 reduzieren.

Fig. 8 zeigt eine Querschnittsansicht einer Anordnung, die zur Herstellung eines erfindungsgemäßen monolithischen Permanentmagneten 14 aus einem Körper 18 aus magnetisierbarem Material verwendet werden kann. Dabei ist in Fig. 8 lediglich eine Hälfte des Permanentmagneten 14 bzw. des Körpers 18 dargestellt, wobei man sich die andere Hälfte aufgrund der rotationssymmetrischen Ausgestaltung des hohlzylindrischen Permanentmagneten 14 bzw. Körpers 18 auch auf der linken Seite der Längsachse L des Permanentmagneten 14 bzw. Körpers 18 vorstellen kann.

Der Körper 18 kann beispielsweise aus Eisen, einer ferrimagnetischen Keramik (Ferrite) oder einem magnetisierbaren Kunststoff bestehen. Bevorzugt werden jedoch magnetisierbare Materialien verwendet, welche Seltenerdmetalle umfassen, wie zum Beispiel Samarium-Cobalt (SmCo) oder Neodym-Eisen-Bor (NdFeB). Dabei kann der Körper 18 durch Sintern der magnetisierbaren Materialien hergestellt werden.

Die Anordnung umfasst eine innere Spule 20 und eine äußere Spule 22, wobei die innere Spule 20 radial innerhalb des Körpers 18 und die äußere Spule 22 radial außerhalb des Körpers angeordnet ist. Beide Spulen 20, 22 umfassen mehrere axial aufeinanderfolgende Wicklungen 24, wobei die Wicklungen 24 der inneren Spule 20 und die Wicklungen 24 der äußeren Spule 22 in Richtung der Längsachse L des Körpers 18 gesehen zumindest annähernd auf gleicher Höhe angeordnet sind. Anhand von Fig. 8 ist zu erkennen, dass jeweils ein Paar von auf gleicher Höhe angeordneten Wicklungen 24 an axialen Enden des Körpers 18 axial übersteht.

Die Wicklungen 24 weisen einen rechteckigen Leiterquerschnitt mit einer radialen Abmessung b und einer axialen Abmessung h auf, wobei die Wicklungen in axialer Richtung durch den Abstand d voneinander separiert sind. Gemäß einer bevorzugten Ausgestaltung ist mindestens eine der Wicklungen 24 der inneren Spule 20 und/oder der äußeren Spule 22 getrennt von den anderen Wicklungen ansteuerbar.

Zur Herstellung eines erfindungsgemäßen monolithischen Permanentmagneten 14 wird ein hohlzylindrischer Körper 18 aus magnetisierbarem Material zwischen der inneren Spule 20 und der äußeren Spule 22 derart angeordnet, dass jeweils ein Paar von auf gleicher Höhe angeordneten Wicklungen 24 an den axialen Enden des Körpers 18 axial übersteht. Nachdem der Körper 18 zwischen den beiden Spulen 20, 22 angeordnet wurde, wird eine Spannung an die Spulen 20, 22 zur Erzeugung eines Stromflusses durch die Wicklungen 24 derart angelegt, dass der resultierende Stromfluss durch die Wicklungen 24 der inneren und äußeren Spule 20, 22 entgegengesetzt gerichtet ist. Durch das zwischen den inneren und äußeren Wicklungen 24 hervorgerufene Magnetfeld wird so ein monolithischer hohlzylinderförmiger Permanentmagnet 14 aus dem Körper 18 gebildet.

Grundsätzlich kann der Permanentmagnet 14 auch aus einem als massiver Zylinder ausgestalteten Körper 18 aus magnetisierbarem Material hergestellt werden, wobei es sich versteht, dass dann das Anordnen einer inneren Spule 20 im Inneren des magnetisierbaren Körpers 18 entfällt.

### Bezugszeichenliste

- 10: Permanentmagnetlager
- 12: Paar von Permanentmagneten
- 14: monolithischer Permanentmagnet
- 14a: rotorseitiger monolithischer Permanentmagnet
- 14b: statorseitiger monolithischer Permanentmagnet
- 16: Abschnitt
- 16': Endabschnitt
- 18: Körper
- 20: innere Spule
- 22: äußere Spule
- 24: Wicklung
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 150: Stator
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

- D: Drehachse
- L: Längsachse
- P, P': Vektorpfeil
- h: axiale Abmessung
- b: radiale Abmessung
- d: Abstand

## Patentansprüche

1. Monolithischer Permanentmagnet (14, 14a, 14b), insbesondere für ein Permanentmagnetlager (10) einer Vakuumpumpe, mit einer Längsachse (L) sowie mehreren entlang dieser angeordneten und zumindest annähernd axial magnetisierten Abschnitten (16, 16'), deren Magnetisierungen jeweils alternierend entgegengesetzt zueinander ausgerichtet sind,
**dadurch gekennzeichnet, dass**
sich die axiale Abmessung und/oder die Magnetisierung wenigstens eines magnetisierten Abschnitts (16) und die axiale Abmessung und/oder die Magnetisierung wenigstens eines anderen magnetisierten Abschnitts (16) unterscheiden.

2. Monolithischer Permanentmagnet (14, 14a, 14b) nach Anspruch 1,
**dadurch gekennzeichnet, dass**
die axiale Abmessung und/oder Magnetisierung des wenigstens einen magnetisierten Abschnitts (16) geringer, insbesondere um die Hälfte geringer, ist als die axiale Abmessung und/oder Magnetisierung des anderen magnetisierten Abschnitts (16).

3. Monolithischer Permanentmagnet (14, 14a, 14b) nach Anspruch 1 oder 2,
**dadurch gekennzeichnet, dass**
sich die axiale Abmessung und/oder Magnetisierung eines oder jedes magnetisierten Endabschnitts (16') und die axiale Abmessung und/oder Magnetisierung eines zu dem oder jedem Endabschnitt (16') benachbarten magnetisierten Abschnitts (16) unterscheiden.

4. Monolithischer Permanentmagnet (14, 14a, 14b) nach Anspruch 2 oder 3,
**dadurch gekennzeichnet, dass**
die axialen Abmessungen und/oder Magnetisierungen aller zwischen zwei Endabschnitten (16') angeordneten Abschnitte (16) des monolithischen Permanentmagnets (14, 14a, 14b) zumindest annähernd gleich groß sind.

5. Monolithischer Permanentmagnet (14, 14a, 14b) nach zumindest einem der vorstehenden Ansprüche,
**dadurch gekennzeichnet, dass**
alle Abschnitte des monolithischen Permanentmagnets (14, 14a, 14b) magnetisch gesättigt sind.

6. Monolithischer Permanentmagnet (14, 14a, 14b) nach zumindest einem der vorstehenden Ansprüche,
**gekennzeichnet durch**
eine ungerade Anzahl magnetisierter Abschnitte (16, 16').

7. Monolithischer Permanentmagnet (14, 14a, 14b) nach zumindest einem der vorstehenden Ansprüche,
**dadurch gekennzeichnet, dass**
der Permanentmagnet (14, 14a, 14b) hohlzylindrisch ausgebildet ist.

8. Permanentmagnetlager (10), insbesondere für eine Vakuumpumpe, mit einem Paar (12) von monolithischen Permanentmagneten (14a, 14b) nach zumindest einem der vorstehenden Ansprüche, dessen einer Permanentmagnet (14a) relativ zu dem anderen Permanentmagneten (14b) um eine zu den Längsachsen (L) der Permanentmagnete (14a, 14b) zumindest annähernd parallelen Drehachse (D) drehbar gelagert ist;
wobei der eine Permanentmagnet (14b) radial innerhalb des anderen Permanentmagneten (14a) derart angeordnet ist, dass sich radial benachbarte Abschnitte (16, 16') des äußeren und inneren monolithischen Permanentmagneten (14a, 14b) in Richtung der Drehachse (D) gesehen zumindest annähernd auf gleicher Höhe befinden; und
wobei die Magnetisierungen der radial benachbarten Abschnitte (16, 16') des äußeren und inneren monolithischen Permanentmagneten (14a, 14b) zumindest annähernd gleichgerichtet sind.

9. Permanentmagnetlager (10) nach Anspruch 8,
**dadurch gekennzeichnet, dass**
das Permanentmagnetlager (10) mindestens zwei in Richtung der Drehachse (D) gesehen aufeinanderfolgende Paare (12) von monolithischen Permanentmagneten (14a, 14b) gebildet ist und angrenzende Abschnitte (16, 16') der aufeinanderfolgenden Permanentmagnete (14a, 14b) jeweils entgegengesetzte Magnetisierungen aufweisen.

10. Permanentmagnetlager (10) nach Anspruch 8 oder 9,
**dadurch gekennzeichnet, dass**
die Permanentmagnete (14a, 14b) des oder jedes Paares von Permanentmagneten (14a, 14b) hohlzylindrisch ausgebildet sind.

11. Vakuumpumpe, insbesondere Turbomolekularpumpe (111), mit einem Rotor (149) und einem Stator (150) und einem Permanentmagnetlager (10) nach zumindest einem der Ansprüche 8 bis 10, wobei der eine monolithische Permanentmagnet (14a) rotorseitig und der andere monolithische Permanentmagnet (14b) statorseitig angeordnet ist.

12. Verfahren zur Herstellung eines monolithischen Permanentmagneten (14), folgende Schritte umfassend:
- Bereitstellen eines Körpers (18) aus magnetisierbarem Material, welcher eine Längsachse (L) definiert;
- Anordnen des Körpers (18) im Inneren einer den Körper (18) umgebenden äußeren Spule (22) mit mehreren axial aufeinanderfolgenden Wicklungen (24); und
- Anlegen einer Spannung an die Spule (22) zur Erzeugung eines Stromflusses durch die Wicklungen (24) derart, dass der resultierende Stromfluss in axial aufeinanderfolgenden Wicklungen (24) entgegengesetzt gerichtet ist, um durch das dadurch hervorgerufene Magnetfeld einen monolithischen Permanentmagneten (14) nach zumindest einem der Ansprüche 1 bis 7 aus dem Körper (18) zu bilden.

13. Verfahren nach Anspruch 12,
**gekennzeichnet, durch**
- Bereitstellen eines hohlzylindrischen Körpers (18) aus magnetisierbarem Material, welcher eine Längsachse (L) definiert;
- zusätzliches Anordnen einer inneren Spule (20) mit mehreren axial aufeinanderfolgenden Wicklungen (24) im Inneren des Körpers (18), wobei die Wicklungen (24) der inneren Spule (20) und der äußeren Spule (22) in Richtung der Längsachse (L) des Körpers (18) gesehen zumindest annähernd auf gleicher Höhe angeordnet sind; und
- Anlegen einer Spannung zur Erzeugung eines Stromflusses durch die Wicklungen (24) der inneren und der äußeren Spule (20, 22) derart, dass der resultierende Stromfluss durch die Wicklungen der inneren und äußeren Spule (20, 22) entgegengesetzt gerichtet ist, um durch das zwischen den inneren und äußeren Wicklungen (24) hervorgerufene Magnetfeld einen monolithischen hohlzylinderförmigen Permanentmagneten (14, 14a, 14b) aus dem Körper (18) zu bilden.

14. Verfahren nach Anspruch 12 oder 13,
**dadurch gekennzeichnet, dass**
die Wicklungen (24) einen rechteckigen, insbesondere quadratischen, Leiterquerschnitt aufweisen.

15. Verfahren nach zumindest einem der Ansprüche 12 bis 14,
**dadurch gekennzeichnet, dass**
mindestens eine der Wicklungen (24) einer Spule (20, 22) getrennt von den anderen Wicklungen (24) ansteuerbar ist.

16. Verfahren nach zumindest einem der Ansprüche 12 bis 15,
**dadurch gekennzeichnet, dass**
sich die axiale Abmessung (h) wenigstens einer Wicklung (24) einer Spule (20, 22) von der axialen Abmessung (h) wenigstens einer anderen Wicklung (24) der Spule (20, 22) unterscheidet; und/oder wenigstens eine Wicklung (24) einer Spule (20, 22) bei Anlegen einer Spannung durch den resultierenden Stromfluss ein Magnetfeld erzeugt, welches sich von dem Magnetfeld einer anderen Wicklung (24) der Spule (20, 22) unterscheidet.

17. Verfahren nach zumindest einem der Ansprüche 12 bis 15,
**dadurch gekennzeichnet, dass**
wenigstens eine Wicklung (24) einer Spule (20, 22) über ein axiales Ende des Körpers (18) übersteht.

## Claims

1. A monolithic permanent magnet (14, 14a, 14b), in particular for a permanent magnet bearing (10) of a vacuum pump, comprising a longitudinal axis (L) and a plurality of sections (16, 16') which are arranged along said longitudinal axis (L), which are at least approximately axially magnetized and whose magnetizations are aligned oppositely to one another in an alternating manner in each case,
**characterized in that**
the axial dimension and/or the magnetization of at least one magnetized section (16) and the axial dimension and/or the magnetization of at least one other magnetized section (16) differ.

2. A monolithic permanent magnet (14, 14a, 14b) in accordance with claim 1,
**characterized in that**
the axial dimension and/or the magnetization of the at least one magnetized section (16) is smaller, in particular smaller by half, than the axial dimension and/or the magnetization of the other magnetized section (16).

3. A monolithic permanent magnet (14, 14a, 14b) in accordance with claim 1 or claim 2,
**characterized in that**
the axial dimension and/or the magnetization of a or each magnetized end section (16') and the axial dimension and/or the magnetization of a magnetized section (16) adjacent to the or each end section (16') differ.

4. A monolithic permanent magnet (14, 14a, 14b) in accordance with claim 2 or claim 3,
**characterized in that**
the axial dimensions and/or magnetizations of all the sections (16) of the monolithic permanent magnet (14, 14a, 14b) arranged between two end sections (16') are at least approximately equal.

5. A monolithic permanent magnet (14, 14a, 14b) in accordance with at least one of the preceding claims,
**characterized in that**
all the sections of the monolithic permanent magnet (14, 14a, 14b) are magnetically saturated.

6. A monolithic permanent magnet (14, 14a, 14b) in accordance with at least one of the preceding claims,
**characterized by**
an odd number of magnetized sections (16, 16').

7. A monolithic permanent magnet (14, 14a, 14b) in accordance with at least one of the preceding claims,
**characterized in that**
the permanent magnet (14, 14a, 14b) is hollow cylindrical.

8. A permanent magnet bearing (10), in particular for a vacuum pump, comprising a pair (12) of monolithic permanent magnets (14a, 14b) in accordance with at least one of the preceding claims, whose one permanent magnet (14a) is rotatably supported relative to the other permanent magnet (14b) about an axis of rotation (D) which is at least approximately in parallel with the longitudinal axes (L) of the permanent magnets (14a, 14b),
wherein the one permanent magnet (14b) is arranged radially within the other permanent magnet (14a) such that radially adjacent sections (16, 16') of the outer and inner monolithic permanent magnets (14a, 14b) are at least approximately at the same level, viewed in the direction of the axis of rotation (D); and
wherein the magnetizations of the radially adjacent sections (16, 16') of the outer and inner monolithic permanent magnets (14a, 14b) are at least approximately of the same direction.

9. A permanent magnet bearing (10) in accordance with claim 8,
**characterized in that**
the permanent magnet bearing (10) is formed by at least two pairs (12) of monolithic permanent magnets (14a, 14b) following one another, viewed in the direction of the axis of rotation (D), and adjacent sections (16, 16') of the permanent magnets (14a, 14b) following one another have opposite magnetizations in each case.

10. A permanent magnet bearing (10) in accordance with claim 8 or claim 9,
**characterized in that**
the permanent magnets (14a, 14b) of the or each pair of permanent magnets (14a, 14b) are hollow cylindrical.

11. A vacuum pump, in particular a turbomolecular pump (111), comprising a rotor (149); a stator (150); and a permanent magnet bearing (10) in accordance with at least one of the claims 8 to 10, wherein the one monolithic permanent magnet (14a) is arranged at the rotor side and the other monolithic permanent magnet (14b) is arranged at the stator side.

12. A method of manufacturing a monolithic permanent magnet (14) comprising the following steps:
- providing a body (18) which is composed of a magnetizable material and which defines a longitudinal axis (L);
- arranging the body (18) in the interior of an outer coil (22) which surrounds the body (18) and which comprises a plurality of axially consecutive windings (24); and
- applying a voltage to the coil (22) to generate a current flow through the windings (24) such that the resulting current flow in axially consecutive windings (24) is directed in the opposite direction in order, through the magnetic field produced thereby, to form a monolithic permanent magnet (14) in accordance with at least one of the claims 1 to 7 from the body (18).

13. A method in accordance with claim 12,
**characterized by**
- providing a hollow cylindrical body (18) which is composed of a magnetizable material and which defines a longitudinal axis (L);
- additionally arranging an inner coil (20) having a plurality of axially consecutive windings (24) in the interior of the body (18), with the windings (24) of the inner coil (20) and of the outer coil (22) being arranged at least approximately at the same level, viewed in the direction of the longitudinal axis (L) of the body (18); and
- applying a voltage to generate a current flow through the windings (24) of the inner and outer coils (20, 22) such that the resulting current flow through the windings of the inner and outer coils (20, 22) is directed in the opposite direction in order, through the magnetic field produced between the inner and outer windings (24), to form a monolithic hollow cylindrical permanent magnet (14, 14a, 14b) from the body (18).

14. A method in accordance with claim 12 or claim 13,
**characterized in that**
the windings (24) have a rectangular conductor cross-section, in particular a square conductor cross-section.

15. A method in accordance with at least one of the claims 12 to 14,
**characterized in that**
at least one of the windings (24) of a coil (20, 22) can be controlled separately from the other windings (24).

16. A method in accordance with at least one of the claims 12 to 15,
**characterized in that**
the axial dimension (h) of at least one winding (24) of a coil (20, 22) differs from the axial dimension (h) of at least one other winding (24) of the coil (20, 22); and/or, on an application of a voltage, at least one winding (24) of a coil (20, 22) generates a magnetic field through the resulting current flow, said magnetic field differing from the magnetic field of another winding (24) of the coil (20, 22).

17. A method in accordance with at least one of the claims 12 to 15,
**characterized in that**
at least one winding (24) of a coil (20, 22) projects beyond an axial end of the body (18).

## Revendications

1. Aimant permanent monolithique (14, 14a, 14b), en particulier pour un palier à aimants permanents (10) d'une pompe à vide, présentant un axe longitudinal (L) et plusieurs portions (16, 16') disposées le long dudit axe et magnétisées au moins approximativement axialement, dont les magnétisations sont respectivement orientées en alternance dans des directions opposées l'une à l'autre,
**caractérisé en ce que**
la dimension et/ou magnétisation axiale d'au moins une portion magnétisée (16) et la dimension et/ou magnétisation axiale d'au moins une autre portion magnétisée (16) diffèrent l'une de l'autre.

2. Aimant permanent monolithique (14, 14a, 14b) selon la revendication 1,
**caractérisé en ce que**
la dimension et/ou magnétisation axiale de ladite au moins une portion magnétisée (16) est plus petite, en particulier moitié plus petite, que la dimension et/ou magnétisation axiale de l'autre portion magnétisée (16).

3. Aimant permanent monolithique (14, 14a, 14b) selon la revendication 1 ou 2,
**caractérisé en ce que**
la dimension et/ou magnétisation axiale d'une ou de chaque portion d'extrémité magnétisée (16') et la dimension et/ou magnétisation axiale d'une portion magnétisée (16) adjacente à la ou à chaque portion d'extrémité (16') diffèrent l'une de l'autre.

4. Aimant permanent monolithique (14, 14a, 14b) selon la revendication 2 ou 3,
**caractérisé en ce que**
les dimensions et/ou magnétisations axiales de toutes les portions (16) de l'aimant permanent monolithique (14, 14a, 14b) disposées entre deux portions d'extrémité (16') sont au moins approximativement de taille égale.

5. Aimant permanent monolithique (14, 14a, 14b) selon l'une au moins des revendications précédentes,
**caractérisé en ce que**
toutes les portions de l'aimant permanent monolithique (14, 14a, 14b) sont magnétiquement saturées.

6. Aimant permanent monolithique (14, 14a, 14b) selon l'une au moins des revendications précédentes,
**caractérisé par**
un nombre impair de portions magnétisées (16, 16').

7. Aimant permanent monolithique (14, 14a, 14b) selon l'une au moins des revendications précédentes,
**caractérisé en ce que**
l'aimant permanent (14, 14a, 14b) est réalisé cylindrique creux.

8. Palier à aimants permanents (10), en particulier pour une pompe à vide, comportant une paire (12) d'aimants permanents monolithiques (14a, 14b) selon l'une au moins des revendications précédentes, dont un aimant permanent (14a) est monté de façon mobile en rotation par rapport à l'autre aimant permanent (14b) autour d'un axe de rotation (D) au moins approximativement parallèle aux axes longitudinaux (L) des aimants permanents (14a, 14b) ;
dans lequel
ledit un aimant permanent (14b) est disposé radialement à l'intérieur de l'autre aimant permanent (14a) de telle manière que des portions radialement adjacentes (16, 16') des aimants permanents monolithiques extérieur et intérieur (14a, 14b) sont au moins approximativement au même niveau, vu dans la direction de l'axe de rotation (D) ; et
les magnétisations des portions radialement adjacentes (16, 16') des aimants permanents monolithiques extérieur et intérieur (14a, 14b) sont orientées au moins approximativement dans le même sens.

9. Palier à aimants permanents (10) selon la revendication 8,
**caractérisé en ce que**
le palier à aimants permanents (10) est formé par au moins deux paires (12) d'aimants permanents monolithiques (14a, 14b) qui se suivent, vues dans la direction de l'axe de rotation (D), et des portions adjacentes (16, 16') des aimants permanents successifs (14a, 14b) présentent des magnétisations respectives opposées.

10. Palier à aimants permanents (10) selon la revendication 8 ou 9,
**caractérisé en ce que**
les aimants permanents (14a, 14b) de la ou de chaque paire d'aimants permanents (14a, 14b) sont réalisés cylindriques creux.

11. Pompe à vide, en particulier pompe turbomoléculaire (111), comprenant un rotor (149) et un stator (150) et un palier à aimants permanents (10) selon l'une au moins des revendications 8 à 10, l'un des aimants permanents monolithiques (14a) étant disposé du côté du rotor et l'autre aimant permanent monolithique (14b) étant disposé du côté du stator.

12. Procédé de fabrication d'un aimant permanent monolithique (14), comprenant les étapes suivantes consistant à :
- fournir un corps (18) en matériau magnétisable, définissant un axe longitudinal (L) ;
- placer le corps (18) à l'intérieur d'une bobine extérieure (22) entourant le corps (18) et comportant plusieurs enroulements axialement successifs (24) ; et
- appliquer une tension à la bobine (22) pour générer un flux de courant à travers les enroulements (24), de telle sorte que le flux de courant résultant dans les enroulements axialement successifs (24) est dirigé dans des sens opposés pour former un aimant permanent monolithique (14) selon l'une au moins des revendications 1 à 7 à partir du corps (18) par le champ magnétique ainsi induit.

13. Procédé selon la revendication 12,
**caractérisé par** les étapes consistant à :
- fournir un corps cylindrique creux (18) en matériau magnétisable, définissant un axe longitudinal (L) ;
- placer en supplément une bobine intérieure (20), ayant plusieurs enroulements axialement successifs (24) à l'intérieur du corps (18), les enroulements (24) de la bobine intérieure (20) et de la bobine extérieure (22) étant disposés au moins approximativement au même niveau, vu dans la direction de l'axe longitudinal (L) du corps (18) ; et
- appliquer une tension pour générer un flux de courant à travers les enroulements (24) des bobines intérieure et extérieure (20, 22), de telle sorte que le flux de courant résultant à travers les enroulements des bobines intérieure et extérieure (20, 22) est dirigé en sens opposés pour former un aimant permanent monolithique (14, 14a, 14b) cylindrique creux à partir du corps (18) par le champ magnétique induit entre les enroulements intérieurs et extérieurs (24).

14. Procédé selon la revendication 12 ou 13,
**caractérisé en ce que**
les enroulements (24) ont une section transversale conductrice rectangulaire, en particulier carrée.

15. Procédé selon l'une au moins des revendications 12 à 14,
**caractérisé en ce que**
l'un au moins des enroulements (24) d'une bobine (20, 22) est pilotable séparément des autres enroulements (24).

16. Procédé selon l'une au moins des revendications 12 à 15,
**caractérisé en ce que**
la dimension axiale (h) d'au moins un enroulement (24) d'une bobine (20, 22) diffère de la dimension axiale (h) d'au moins un autre enroulement (24) de la bobine (20, 22) ; et/ou au moins un enroulement (24) d'une bobine (20, 22), lorsqu'une tension est appliquée, génère un champ magnétique par le flux de courant résultant, qui diffère du champ magnétique d'un autre enroulement (24) de la bobine (20, 22).

17. Procédé selon l'une au moins des revendications 12 à 15,
**caractérisé en ce que**
au moins un enroulement (24) d'une bobine (20, 22) fait saillie au-delà d'une extrémité axiale du corps (18).
